# EUROPÄISCHE PATENTSCHRIFT

(11) **EP 2 416 182 B1**
(45) Veröffentlichungstag und Bekanntmachung des Hinweises auf die Patenterteilung: **29.05.2013**
(21) Anmeldenummer: 10008109.0
(22) Anmeldetag: 03.08.2010
(51) Int. Cl.: G01V 8/14, G01B 11/24

(54) **Verfahren und Vorrichtung zur automatischen Konturerfassung**
Method and device for automatically recording contours
Procédé et dispositif d'établissement de contour automatique

(43) Veröffentlichungstag der Anmeldung: 08.02.2012
(73) Patentinhaber: Sick AG, 79183 Waldkirch (DE)
(72) Erfinder: Erb, Frank, 79211 Denzlingen (DE)
(74) Vertreter: Manitz, Finsterwald & Partner GbR

(56) Entgegenhaltungen:
- EP-A1- 1 970 727
- DE-A1- 10 142 161
- DE-A1- 10 146 752
- DE-A1-102005 020 560

## Beschreibung

Die Erfindung betrifft ein Verfahren und eine Vorrichtung zur automatischen Konturerfassung in einem Erfassungsbereich, ein Fahrzeug mit einer solchen Vorrichtung und ein Verfahren zur Überwachung eines Überwachungsbereiches.

Scannersysteme, insbesondere Laserscanner, werden zur Überwachung einer Umgebung eingesetzt. Lichtstrahlen werden dazu mit unterschiedlichen Winkeln in einen Erfassungsbereich gesendet und das reflektierte Licht detektiert. Auf diese Weise kann die Umgebung erfasst und in dem Erfassungsbereich befindliche Objekte detektiert werden. Zum Beispiel aus der Laufzeit eines Lichtpulses oder der Phasenverschiebung eines modulierten Lichtstrahles lässt sich zusätzlich auf die Entfernung eines reflektierenden Objekts im Erfassungsbereich schließen.

Zur Sicherheitsüberwachung zum Beispiel von Maschinen in einem Gefahrenbereich (zum Beispiel Pressen) wird zum Beispiel der räumliche Bereich vor der Presse mit einem solchen Scannersystem überwacht, um zu detektieren, wenn sich in diesem Bereich ein unzulässiges Objekt befindet, zum Beispiel ein Körperteil einer Bedienperson. In diesem Fall kann die Maschine zum Beispiel sicherheitsabgeschaltet werden.

Zur Steuerung von Fahrzeugen, insbesondere von fahrerlosen Fahrzeugen, werden Scannersysteme eingesetzt, die mit dem Fahrzeug bewegt werden. Zum Beispiel der Raum vor dem sich bewegenden Fahrzeug wird abgescannt, um darin befindliche Objekte zu detektieren. Werden entsprechende Objekte detektiert, kann ein automatischer Bremsvorgang oder ein Ausweichvorgang eingeleitet werden.

In jedem Fall wird in einem vorbetrieblichen Konfigurationsvorgang die relative Lage des Scannersystems zu dem zu überwachendem Überwachungsbereich festgestellt. Zum Beispiel ist es bei einem Fahrzeug notwendig, dass die relative Lage des Scanners zu dem bewegten Fahrzeug bekannt ist.

Als Manipulationsschutz und um sicherzustellen, dass sich die so bestimmte Lage des Scanners während des Betriebes nicht verändert bzw. nicht verändert worden ist, wird während des Betriebes die Kontur von relativ zum Scanner feststehenden Objekten überwacht. Bei stationären Applikationen können dazu feststehende Objekte, wie umgebende Wände oder Zäune eingesetzt werden. Bei mobilen Anwendungen, zum Beispiel bei fahrerlosen Transportsystemen, werden als relativ zum Scanner feststehende Objekte zum Beispiel Fahrzeugabdeckungen oder andere Fahrzeugteile verwendet.

Bei bekannten Anwendungen werden dazu von einem Benutzer von Hand die Konturbereiche von relativ zum Scanner feststehenden Objekten in die interne Auswerteeinheit des Scanners eingegeben. Die so eingegebenen Daten können dann während des Betriebes mit den von dem Scannersystem aktuell ermittelten Werten verglichen werden, um festzustellen, ob sich an einem Punkt im Raum eine erwartete Kontur befindet oder nicht. (Siehe Dokument 10 146 752)

Es ist die Aufgabe der vorliegenden Erfindung ein Verfahren und eine Vorrichtung zur automatischen Konturerfassung anzugeben.

Diese Aufgabe wird mit einem Verfahren mit den Merkmalen des Anspruchs 1 und eine Vorrichtung mit den Merkmalen des Anspruchs 10 gelöst.

Anspruch 8 ist auf ein Verfahren zur Überwachung eines Überwachungsbereiches gerichtet, bei dem das Vorhandensein von mit dem erfindungsgemäßen Verfahren erfassten Konturen überprüft wird. Ansprüche 11 und 12 sind auf ein Fahrzeug bzw. eine Maschine mit einer erfindungsgemäßen Vorrichtung zur automatischen Konturerfassung gerichtet.

Unteransprüche sind jeweils auf bevorzugte Ausgestaltungen bzw. Ausführungsformen gerichtet.

Bei einem erfindungsgemäßen Verfahren zur automatischen Konturerfassung in einem Erfassungsbereich werden M Scanvorgänge zum jeweiligen Abscannen des Erfassungsbereiches mit wenigstens einem Scanner durchgeführt. Ein Scanvorgang umfasst dabei das Aussenden von N Lichtstrahlen Lᵢ (i = 1, ..., N) mit unterschiedlichen Richtungen Rᵢ in den Erfassungsbereich. Gegebenenfalls im Erfassungsbereich reflektiertes Licht wird detektiert.

Für jeden Index i ist die Richtung Rᵢ bei jedem der M Scanvorgänge gleich.

Das "Aussenden von N Lichtstrahlen Lᵢ" in Richtungen Rᵢ kann dabei auf unterschiedliche Weise realisiert werden. Zum Beispiel können einzelne diskrete Lichtstrahlen Lᵢ in die jeweiligen Richtungen Rᵢ (i = 1, ..., N) gesendet und die Reflexion ausgewertet werden. Eine andere Alternative sieht vor, dass ein einzelner - zur Ermöglichung des Lichtlaufzeitverfahrens gepulster oder modulierter - Scanlichtstrahl zum Beispiel mit Hilfe eines beweglichen Spiegels abgelenkt wird und so den Erfassungsbereich überstreicht. Wenn der Scanlichtstrahl gerade die Richtung Rᵢ beleuchtet, wird das jeweilige Reflexionssignal ausgewertet. Die Lichtstrahlen Lᵢ entsprechen bei einer solchen Verfahrensführung also dem Scanlichtstrahl zu unterschiedlichen Zeitpunkten. Auch dies bedeutet effektiv die Auswertung von N Lichtstrahlen Lᵢ in der jeweiligen Richtung Rᵢ, so dass auch eine solche Alternative für die Zwecke des vorliegenden Textes als Aussenden von N Lichtstrahlen Lᵢ zu verstehen ist.

Für jede Richtung Rᵢ wird die Länge des freien Lichtweges dᵢ bei jedem der M Scanvorgänge bestimmt. Für jede Richtung Rᵢ (i = 1, ..., N) entstehen auf diese Weise M Messwerte für den freien Lichtweg di (i = 1, ..., N). Für jede der N Richtungen wird dann aus diesen M Messwerten der maximal gemessene freie Lichtweg dmaxᵢ und der minimal gemessene freie Lichtweg dminᵢ festgestellt. Eine Richtung Rᵢ wird erfindungsgemäß in eine Konturklasse klassifiziert, wenn sich der maximal gemessene freie Lichtweg dmaxᵢ und der minimal gemessene freie Lichtweg dminᵢ um höchstens einen vorgegebenen Grenzwert T unterscheiden. Eine Klassifizierung einer Richtung Rᵢ in der Konturklasse entspricht dann einer Klassifizierung des zugehörigen Lichtstrahls Lᵢ als auf eine Kontur treffend, die bezüglich des Scanners feststehend ist, wie es anhand von Ausführungsbeispielen noch erläutert wird. Der Grenzwert T, um den sich der maximal gemessene freie Lichtweg und der minimal gemessene freie Lichtweg höchstens unterscheiden dürfen, um zu einer Klassifizierung der Richtung Rᵢ in die Konturklasse zu führen, richtet sich nach den gewünschten Sicherheitsanforderungen. Im Extremfall kann er auch nahe Null oder sogar gleich Null sein.

Alternativ zu den jeweiligen Messwerten für den maximal gemessenen und den minimal gemessenen freien Lichtweg können auch Werte ausgewertet werden, die für diese Messwerte charakteristisch sind und mit diesen in eindeutigem Zusammenhang dazu stehen.

Für jede Richtung Rᵢ kann dann zum Beispiel in einem Speicher abgelegt werden, ob diese Richtung Rᵢ in der Konturklasse ist oder nicht. Dieser Datensatz kann beim späteren Betrieb einer Vorrichtung, bei der der Scanner zur Überwachung der Umgebung eingesetzt wird, verwendet werden.

Während der Durchführung des erfindungsgemäßen Verfahrens zur Konturerfassung wird der Lichtweg zwischen Scanner und Kontur freigehalten, um eine ungestörte Konfiguration zu gewährleisten.

Die Umgebung wird hingegen verändert, damit für Lichtstrahlen, die nicht in einer Richtung Rᵢ ausgesendet werden, die zur Konturklasse gehört, der freie Lichtweg dᵢ nicht für alle M Scanvorgänge gleich ist.

Eine Variation der Umgebung kann auf einfache Weise erzeugt werden. Zum Beispiel kann sich während der Durchführung des erfindungsgemäßen Verfahrens bei einem fahrerlosen Transportsystem eine Person kontinuierlich um das Fahrzeug bewegen oder das ansonsten stehende Fahrzeug kann sich um seine eigene Achse drehen. Bei einer stationären Anwendung, bei der der Scanner im Raum feststeht, kann als veränderliche Umgebung zum Beispiel ein Arbeitszyklus der stationären Maschine durchgeführt werden.

Im vorliegenden Text wird der Begriff "Licht" nicht nur für sichtbares Licht sondern auch für elektromagnetische Strahlung im nicht-sichtbaren Bereich verwendet, also insbesondere für auch infrarotes oder ultraviolettes Licht.

Die Länge des freien Lichtweges kann bei einer bevorzugten Ausgestaltung jeweils aus der Laufzeit des Lichtes in der Richtung Rᵢ des jeweiligen Lichtstrahls Lᵢ von dem Scanner zu einem reflektierenden Objekt und wieder zurück durch Multiplikation mit der Lichtgeschwindigkeit und Division durch zwei bestimmt werden.

Die Feststellung des maximal gemessenen freien Lichtwegs dmaxᵢ und des minimal gemessenen freien Lichtwegs dminᵢ in einer Richtung Rᵢ kann bei einer bevorzugten Ausgestaltung des erfindungsgemäßen Verfahrens wie folgt durchgeführt werden. Zunächst wird für jede der Richtungen der abgespeicherte Wert für den minimal gemessenen freien Lichtweg auf einen Wert größer als dem größten messbaren freien Lichtweg gesetzt, der mit dem verwendeten Scanner grundsätzlich messbar wäre. Der gespeicherte Wert für den maximal gemessenen freien Lichtweg wird hingegen auf einen Wert initialisiert, der kleiner ist als der kleinste mit dem verwendeten Scanner grundsätzlich messbare freie Lichtweg. Zum Beispiel kann dieser Wert auf einen negativen Wert, zum Beispiel -1, gesetzt werden.

Es werden dann die M Scanvorgänge bei sich verändernder Umgebung durchgeführt. Bei jedem Scanvorgang wird für jede Richtung Rᵢ der freie Lichtweg dᵢ gemessen. Ist dieser Messwert kleiner als der aktuell abgespeicherte Wert für den minimal gemessenen freien Lichtweg, so wird der Wert für den minimal gemessenen freien Lichtweg auf den neu gemessenen freien Lichtweg gesetzt. Ist der bei dem jeweiligen Scanvorgang gemessene freie Lichtweg dᵢ in der Richtung Rᵢ größer als der aktuell gespeicherte Wert für den maximal gemessenen freien Lichtweg, so wird der Wert für den maximal gemessenen freien Lichtweg auf den bei diesem Scanvorgang gemessenen Messwert des freien Lichtweges gesetzt.

Dies wird für jeden der aufeinander folgenden M Scanvorgänge wiederholt. Dies führt zu einer iterativen Aktualisierung für den maximal gemessenen freien Lichtweg dmaxᵢ und den minimal gemessenen freien Lichtweg dminᵢ in jeder Richtung Rᵢ.

Bei einer alternativen Ausgestaltung wird der maximal gemessene freie Lichtweg und der minimal gemessene freie Lichtweg in einer Richtung Rᵢ aus einem Histogramm entnommen, in welchem die Messwerte des freien Lichtweges für die M Scanvorgänge aufgetragen sind.

Im Idealfall sollten sich der maximal gemessene freie Lichtweg und der minimal gemessene freie Lichtweg nicht unterscheiden, wenn in der Richtung Rᵢ eine bezüglich des Scanners feststehende Kontur vorliegt. Wird jedoch keine Kontur detektiert, unterscheiden sich die Messwerte für den maximal gemessenen freien Lichtweg und den minimal gemessenen freien Lichtweg nach Durchführung der M Scanvorgänge, so dass die Richtung Rᵢ nicht als zur Kontur gehörig klassifiziert wird, wenn der Unterschied größer als ein Grenzwert T ist.

Eine vorteilhafte Weiterbildung des erfindungsgemäßen Verfahrens sieht außerdem vor, dass nicht alle in der Konturklasse einklassifizierten Richtungen Rᵢ auch für die weitere Auswertung herangezogen werden. Abhängig von zusätzlichen Bedingungen kann eine Richtung Rᵢ, die in der Konturklasse klassifiziert ist, als instabil klassifiziert werden. Beispielsweise kann dies vorgenommen werden, wenn eine räumlich benachbarte Richtung Rⱼ nicht in der Konturklasse klassifiziert ist. Außerdem kann zum Beispiel eine Richtung Rᵢ als instabil klassifiziert werden, wenn sich für diese Richtung Rᵢ die abgespeicherten Werte des maximal gemessenen freien Lichtwegs und des minimal gemessenen freien Lichtwegs nach Durchführung der M Scanvorgänge um mehr als die maximal zu erwartende Messungenauigkeit der Entfernungsmessung des Scanners unterscheiden. Schließlich kann zum Beispiel eine Richtung Rᵢ aus anderen Gründen von einem Benutzer als instabil klassifiziert werden, so dass Lichtstrahlen Lᵢ in dieser Richtung Rᵢ nicht weiter ausgewertet werden. Möglich ist zum Beispiel, dass ein Winkelbereich des Erfassungsbereiches ausgeklammert wird.

Bei einer bevorzugten Ausgestaltung des erfindungsgemäßen Verfahrens wird für diejenigen Richtungen Rᵢ, die in einer Konturklasse klassifiziert sind, ein jeweiliger Messtoleranzbereich MTᵢ für die Entfernung festgelegt, in welchem bei einem darauf folgendem Überwachungsbetrieb eine Kontur erwartet wird. Dieser Messtoleranzbereich MTᵢ kann von dem maximal gemessenen freien Lichtweg und dem minimal gemessenen freien Lichtweg abhängig gewählt werden. Im Extremfall kann die Breite dieses Messtoleranzbereichs auch nahe Null oder gleich Null gewählt werden.

Bei einem erfindungsgemäßen Verfahren zur Überwachung eines Überwachungsbereiches wird während der Überwachung überprüft, ob sich in den jeweiligen Messtoleranzbereichen MTᵢ (i = 1, ..., N) zu den als in der Konturklasse klassifizierten Richtungen eine Kontur befindet. Wenn dies nicht der Fall ist, hat sich die räumliche Beziehung zwischen Scanner und Kontur im Vergleich zu dem Zeitpunkt der automatischen Konturerfassung offensichtlich verändert oder der Scanner arbeitet nicht ordnungsgemäß. Dies kann zum Beispiel passieren, wenn sich die Lage des Scanners verändert hat oder manipuliert worden ist oder der Scanner defekt ist. Wenn die Überprüfung also ergibt, dass sich in dem Messtoleranzbereich MTᵢ keine erwartete Kontur befindet, kann diese Information zur Erzeugung eines Signals verwendet werden, zum Beispiel eines Stoppsignals oder eines Warnsignals.

Wird das erfindungsgemäße Verfahren zur automatischen Konturerfassung verwendet, um das Überwachungssystem eines Fahrzeugs, zum Beispiel eines fahrerlosen Fahrzeugs, zu konfigurieren, umfasst der Überwachungsbereich zumindest einen Teil der Umgebung des Fahrzeugs. Teile des Fahrzeuges selber, also zum Beispiel der Karosserie, können in einem vorgeschalteten Einlernprozess mit einem erfindungsgemäßen Verfahren zur automatischen Konturerfassung als Kontur erfasst werden.

Dies stellt sicher, dass beim Betrieb des Fahrzeugs die Umgebung sicher abgescannt und ausgewertet werden kann. Dabei wird die korrekte Lage und Funktionsfähigkeit des mit dem Fahrzeug bewegten Scanners mit einem erfindungsgemäßen Verfahren zur Überwachung eines Überwachungsbereiches überprüft.

Wird das erfindungsgemäße Verfahren zur automatischen Konturerfassung verwendet, um das Überwachungssystem einer Maschine, zum Beispiel einer Presse, zu konfigurieren, umfasst der Überwachungsbereich einen Gefahrenbereich der Maschine. Bei einer Presse kann dies zum Beispiel der Raum zwischen den zwei Presswerkzeugen oder der Raum vor diesen Presswerkzeugen sein, um eine Sicherheitsabschaltung zu bewirken, wenn sich dort zum Beispiel ein Körperteil einer Bedienperson befindet. Der Scanner ist bei einer solchen Anwendung raumfest angeordnet. Als Kontur werden bei der Durchführung eines erfindungsgemäßen Verfahrens zur Konturerfassung zum Beispiel Wände, Zäune oder feststehende Teile der Maschine verwendet. Als gegenüber dem Scanner veränderliche Umgebung kann zum Beispiel das bewegte Presswerkzeug während eines zu diesem Zweck durchgeführten Arbeitszyklus verwendet werden. Das erfindungsgemäße Verfahren stellt hier sicher, dass beim Betrieb der Werkzeugmaschine sicher überprüft werden kann, ob der Scanner ordnungsgemäß funktioniert und sich seine Lage nicht verändert hat.

Die Erfindung betrifft weiterhin eine Vorrichtung zur automatischen Konturerfassung mit wenigstens einem Scanner zum Abscannen eines Erfassungsbereiches und einer Steuereinrichtung, die zur Durchführung eines erfindungsgemäßen Verfahrens zur automatischen Konturerfassung ausgestaltet ist. Besondere Ausführungsformen und die Vorteile einer erfindungsgemäßen Vorrichtung und deren besonderer Ausführungsformen ergeben sich aus der obigen Schilderung für die entsprechenden Verfahren.

Die Erfindung wird im Folgenden anhand einer Ausgestaltung des erfindungsgemäßen Verfahrens am Beispiel eines fahrerlosen Fahrzeugs im Detail geschildert, wobei auf die beiliegenden schematischen Figuren Bezug genommen wird. Dabei zeigen
- Fig. 1: ein Fahrzeug mit einer Vorrichtung zur Durchführung des erfindungsgemäßen Verfahrens zur automatischen Konturerfassung und zur Überwachung eines Überwachungsbereiches,
- Fig. 2: eine Draufsicht auf dieses Fahrzeug, und
- Fig. 3: eine alternative Anordnung.

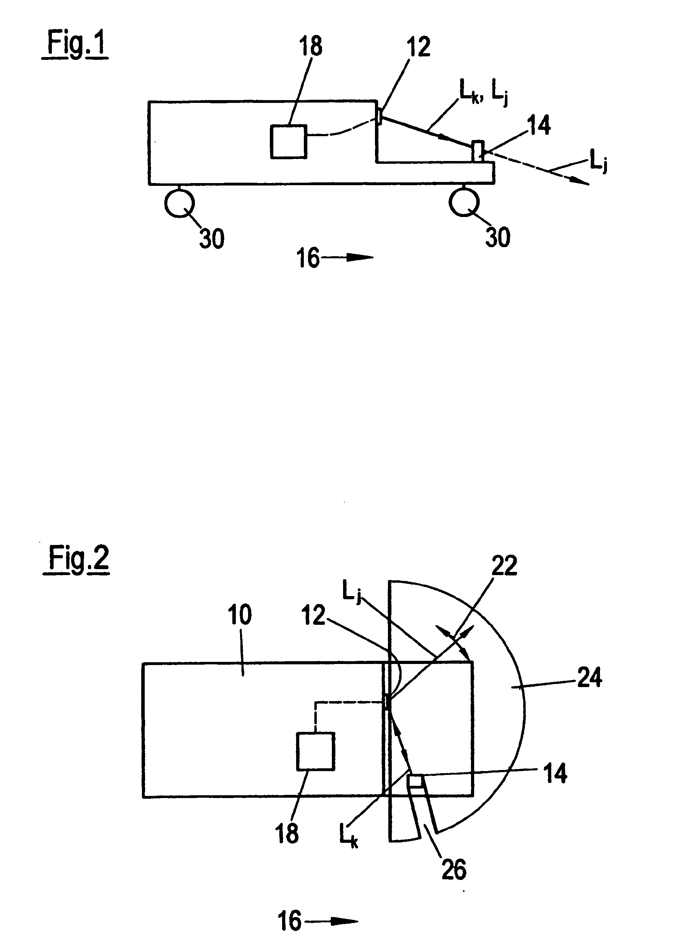

Fig. 1 zeigt ein fahrerloses Transportfahrzeug 10 mit Rädern 30, das sich in Richtung 16 bewegt. An dem fahrerlosen Transportfahrzeug 10 befindet sich ein Scanner 12, der Lichtstrahlen Lᵢ (i = 1, ..., N) in den Raum vor dem Fahrzeug 10 sendet. In der Regel werden dazu N Lichtstrahlen Lᵢ in N Richtungen Rᵢ (i = 1, ..., N) in den Scanbereich 24 gesendet, die gleichmäßig über den Scanbereich 24 verteilt sind. Der Scanbereich des Scanners 12 entspricht hier dem Erfassungsbereich, in dem Konturen automatisch erfasst werden sollen.

Mit Lₖ werden hier Lichtstrahlen in Richtungen Rₖ bezeichnet, in der eine Kontur 14 liegt. Lⱼ bezeichnet Lichtstrahlen in Richtungen Rⱼ, in denen keine Kontur vorhanden ist. Die Ausgangssignale des Scanners 12 werden von einer Steuerung 18 in an sich bekannter Weise ausgewertet, um gegebenenfalls Lenkvorgänge oder Bremsvorgänge einzuleiten, wenn in dem Raum vor dem Fahrzeug 10 Hindernisse auftauchen. Die Daten- und Signalübertragung zwischen Scanner 12 und Steuerungseinrichtung 18 wird durch eine gestrichelte Linie symbolisiert. Eine interne Auswerteeinheit des Scanners 12 und die Steuerungseinrichtung 18 können auch miteinander integriert sein.

Mit Bezugsziffer 14 ist ein Element bezeichnet, das nur schematisch einen Teil der Karosserie des Fahrzeugs 10 symbolisieren soll. Es kann zum Beispiel auch einfach ein Teil der Fahrzeugabdeckung verwendet werden.

Fig. 2 zeigt die Draufsicht auf das Fahrzeug 10. Hier ist der Scanbereich 24 erkennbar, der mit dem Scanner 12 abgescannt werden kann. Dazu werden Lichtstrahlen Lⱼ, Lₖ in den Erfassungsbereich 24 ausgesendet. Zum Beispiel wird ein Scanstrahl in Richtung der Pfeile 22 periodisch bewegt. Der eingezeichnete Lichtstrahl Lⱼ kann ungehindert in den Raum vor dem Fahrzeug 10 eindringen. Der eingezeichnete Lichtstrahl Lₖ trifft auf die Karosseriekontur 14 und wird dort reflektiert. Der Bereich 26 wird damit aus dem Erfassungsbereich 24 ausgeblendet.

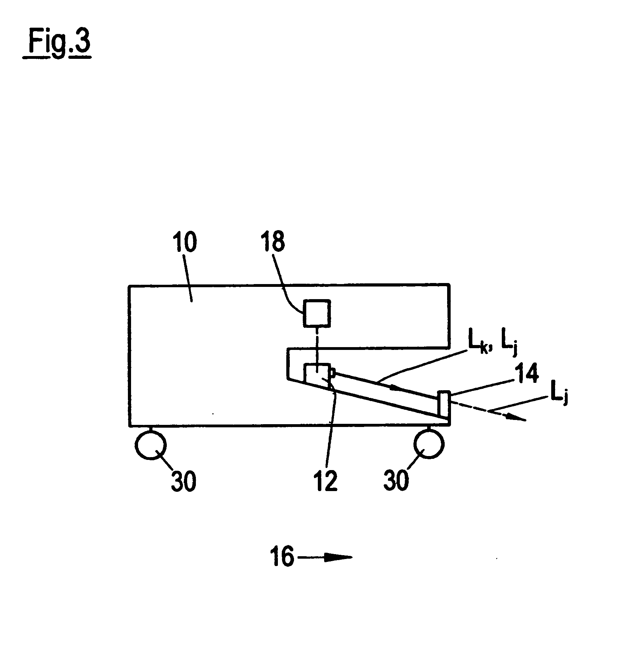

Fig. 3 zeigt die Seitenansicht einer alternativen Ausgestaltung. Hier ist das Scannersystem in einer entsprechend gestalteten Ausnehmung der Fahrzeugkarosserie vorgesehen, die sich im unteren Bereich des Fahrzeuges befindet. Auf diese Weise ist es auf einfache Weise möglich, auch den Bereich unmittelbar vor dem Fahrzeug zu überwachen. Gleiche Elemente werden mit den gleichen Bezugsziffern wie bei der Ausgestaltung der Fig. 1 bezeichnet.

Zunächst wird eine erfindungsgemäße automatische Konturerfassung vorgenommen.

Der Scanstrahl des Scanners 12 wird dazu zum Beispiel bei stehendem Fahrzeug in Betrieb genommen und bewegt sich in den Pfeilrichtungen 22 hin und her. Der Weg zwischen Scanner 12 und Kontur 14 wird freigehalten.

Um eine veränderliche Umgebung zu erzeugen, kann zum Beispiel eine Person während des Konturerfassungsvorganges stetig um das Fahrzeug herum gehen. Alternativ kann das Fahrzeug sich zum Beispiel um seine eigene Achse drehen. Derartige Maßnahmen gewährleisten, dass sich die Umgebung des Fahrzeuges kontinuierlich verändert. Demgegenüber bleibt der Konturteil 14 bezüglich des Scanners 12 feststehend. Zu vorgegebenen Zeitpunkten wird das am Scanner 12 in an sich bekannter Weise gemessene, aus dem Erfassungsbereich 24 zurück reflektierte Signal ausgewertet. Durch die vorgegebenen Zeitpunkte ergibt sich effektiv eine Auswertung einzelner Lichtstrahlen Lᵢ in derjenigen Richtung Rᵢ, in sich der Scanlichtstrahl zu diesem Zeitpunkt ausbreitet.

Aufgenommen und abgespeichert werden von der Steuerung 18 oder von einer internen Auswerteeinheit des Scanners 12 insbesondere die Entfernungswerte dᵢ für die einzelnen Richtung Rᵢ. Die Entfernungen werden zum Beispiel mit Hilfe des an sich bekannten Time-Of Flight-Verfahrens gemessen, bei dem die Laufzeit des Lichtes von dem Scanner zu einem reflektierenden Objekt und wieder zurück durch Multiplikation der Laufzeit mit der Lichtgeschwindigkeit und Division durch zwei bestimmt.

Im Speicher der Steuerung 18 oder im Speicher der internen Auswerteeinheit des Scanners 12 werden Werte für den minimal gemessenen freien Lichtweg dminᵢ und für den maximal gemessenen freien Lichtweg dmaxᵢ abgelegt. Der minimale und der maximale gemessene freie Lichtweg entsprechen der minimalen und der maximalen gemessenen Entfernung eines reflektierenden Gegenstandes im Erfassungsbereich 24.

Zur Initialisierung wird der Parameter für den minimal gemessenen freien Lichtweg auf einen Wert gesetzt, der größer ist als der größte mit dem Scanner messbare freie Lichtweg. Der Parameter für den maximal gemessenen freien Lichtweg wird auf einen Wert gesetzt, der kleiner ist als der kleinste mit dem verwendeten Scanner messbare freie Lichtweg, zum Beispiel auf einen Wert von -1.

Es wird jetzt ein erster Scanvorgang durchgeführt, in dem die Messwerte des freien Lichtweges dᵢ für die unterschiedlichen Richtungen Rᵢ aufgenommen werden. Ist der gemessene freie Lichtweg bei einer solchen Messung dabei kleiner als der aktuell abgespeicherte Wert für den minimal gemessenen freien Lichtweg, so wird dieser Parameter für den minimal gemessenen freien Lichtweg auf den Wert des aktuell gemessenen freien Lichtweges gesetzt. Ist hingegen der gemessene freie Lichtweg bei einem Scanvorgang größer als der aktuell abgespeicherte Wert für den maximal gemessenen freien Lichtweg, so wird dieser Parameter des maximal gemessenen freien Lichtweges auf den gerade gemessenen Wert des freien Lichtweges gesetzt. Liegt der bei einem Scanvorgang gemessene freie Lichtweg zwischen dem abgespeicherten maximal gemessenen freien Lichtweg dmaxᵢ und dem minimal gemessenen freien Lichtweg dminᵢ, wird keine Veränderung der Werte vorgenommen.

Bei jedem der folgenden Scanvorgänge während der Durchführung des Verfahrens zur automatischen Konturerfassung wird eine entsprechende Anpassung der Werte für den maximal gemessenen freien Lichtweg und dmaxᵢ und dminᵢ für jede Richtung Rᵢ vorgenommen.

Bei jedem der M Scanvorgänge wird also für jede einzelne Richtung Rᵢ eine Aktualisierung der abgespeicherten Werte für den maximal gemessenen freien Lichtweg dmaxᵢ und den minimal gemessenen freien Lichtweg dminᵢ vorgenommen.

Wenn sich zum Beispiel während der automatischen Konturerfassung eine Person stetig um das Fahrzeug bewegt, werden bei jedem der M Scanvorgänge unterschiedliche freie Lichtwege für die jeweilige Richtung Rᵢ gemessen. Nur dort, wo der jeweilige Lichtstrahl auf ein Hindernis 14 trifft, das zum Scanner feststehend ist, wird immer derselbe Wert gemessen werden. Im Idealfall ergibt sich bei der oben geschilderten Verfahrensführung für Lichtstrahlen Lₖ, die auf das Hindernis 14 treffen, nach Durchführung der M Scanvorgänge und der beschriebenen Aktualisierungsschritte für den maximal gemessenen freien Lichtweg dmaxₖ und den minimal gemessenen freien Lichtweg dminₖ derselbe Wert.

Für andere Richtungen Rⱼ ergeben sich jedoch jeweils unterschiedliche Werte für dmaxj und dminⱼ.

Wenn sich also die nach Durchführung der M Scanvorgänge und der beschriebenen Aktualisierungsschritte vorliegenden Werte in einer Richtung Rₖ für den maximal gemessenen freien Lichtweg und den minimal gemessenen freien Lichtweg nicht oder höchstens um einen vorgegebenen Grenzwert unterscheiden, kann diese Richtung Rₖ als "auf-die-Konturtreffend" klassifiziert werden, also in eine Konturklasse einklassifiziert werden.

Alle anderen Richtungen Rⱼ können einer hier als Umgebungsklasse bezeichneten Klasse zugeordnet werden. In dem Speicher der Steuerung 18 oder im Speicher der Auswerteeinheit des Scanners 12 ist nach Durchführung dieser M Scanvorgänge also abgelegt, in welcher Richtung Rₖ eine zum Scanner 12 feststehende Kontur 14 vorliegt.

In einem weiteren Schritt können aus anderen Gründen unsichere Richtungen ausgeschlossen werden. Dies ist zum Beispiel der Fall, wenn eine Richtung Rₖ in der Konturklasse eingeordnet ist, aber eine direkt benachbarte Richtung Rⱼ nicht. Ein anderes Kriterium kann zum Beispiel sein, wenn die in der jeweiligen Richtung gemessenen freien Lichtwege sich um mehr als die maximal erwartete Messungenauigkeit des Scanners voneinander unterscheiden. Schließlich können einzelne Bereiche von einem Benutzer aktiv ausgeschlossen werden, indem der Steuerung 18 oder der internen Auswerteeinheit des Scanners 12 entsprechende Information gegeben wird.

Nur diejenigen Richtungen Rₖ, die der Konturklasse zugeordnet sind und nicht durch die Abprüfung dieser weiteren Stabilitätskriterien aussortiert worden sind, werden in eine "stabile Konturklasse" einsortiert.

Nur für die Richtungen dieser stabilen Konturklasse wird dann jeweils ein Messtoleranzbereich MTₖ festgelegt, der zum Beispiel so gewählt wird, dass er der maximal erwarteten Messungenauigkeit des Scanners um den Mittelwert aus dem für die Richtung Rₖ gemessenen maximalen gemessenen freien Lichtweges und dem minimal gemessenen freien Lichtweges entspricht.

Dieser Messtoleranzbereich MTₖ gibt vor, in welchem Bereich eine Kontur erwartet wird, wenn das Fahrzeug 10 mit dem Scanner 12 in Betrieb ist.

Während des Betriebes des Fahrzeuges werden die gemessenen freien Lichtwege in den Richtungen Rᵢ insbesondere in den Richtungen Rₖ, die in der stabilen Konturklasse klassifiziert sind, ausgewertet. Es wird dann überprüft, ob sich eine Kontur im Messtoleranzbereich befindet. Ergeben sich Abweichungen in einer Anzahl, die über einem Grenzwert liegt, wird ein Signal erzeugt, das zum Beispiel zum Stoppen des Fahrzeugs führt. Ein Grund dafür kann zum Beispiel darin liegen, dass sich die Lage des Scanners 12 nach der automatischen Konturerfassung geändert hat oder eine unerlaubte Manipulation vorgenommen worden ist.

Das geschilderte Beispiel bezieht sich auf ein fahrerloses Fahrzeug. Bei stationären Maschinen, zum Beispiel bei Pressen, wird zum Beispiel ein Gefahrenbereich vor der Maschine überwacht, um das Eindringen unzulässiger Objekte, zum Beispiel Körperteile einer Bedienperson, nachzuweisen. Auch hier kann ein erfindungsgemäßes Verfahren zur automatischen Konturerfassung zum Einsatz kommen, um einen raumfesten Scanner zu konfigurieren. Als zum Scanner feststehende Objekte können dann zum Beispiel Wände oder Zäune eingesetzt werden. Die sich bewegende und ändernde Scannerumgebung wird zum Beispiel durch das sich bewegende Maschinenteil gebildet. Anstelle der für das Fahrzeug geschilderten Person, die das Fahrzeug bei dem Konturerfassungsprozess umläuft, wird bei einer stationären Maschine zum Beispiel ein vollständiger Arbeitszyklus durchgeführt. In die Konturklasse werden derartige Richtungen einsortiert, die nicht von dem sich bewegenden Maschinenteil beeinflusst werden. Lichtstrahlen in Richtungen, die auf das sich bewegende Maschinenteil treffen, werden in die Umgebungsklasse einsortiert.

Für derartige stationäre Anwendungen bezeichnet der Begriff der "Umgebung" also hier denjenigen Bereich, der sich (im Gegensatz zur zum Scanner im ordnungsgemäßen Fall feststehenden Kontur) bezüglich des Scanners bewegt.

Das erfindungsgemäße automatische Verfahren zur Konturerfassung besteht insbesondere aus zwei Teilen. Der erste Teil ermittelt den minimalen und den maximalen gemessenen freien Lichtweg aus den Messwerten mehrerer Scanprozesse in jeder Richtung. Der zweite Teil klassifiziert die einzelnen Richtungen, ob sie zu einer Kontur, die zum Scanner feststehend ist, gehören oder nicht. Für jede Richtung, die als Konturpunkt klassifiziert wurde, bestimmt der zweite Teil des erfindungsgemäßen Verfahrens außerdem eine Messtoleranz, in der beim späteren Betrieb eine Kontur erwartet wird.

### Bezugszeichenliste

- 10: fahrerloses Fahrzeug
- 12: Laserscanner
- 14: Karosserieteil
- 16: Bewegungsrichtung
- 18: Steuerungseinrichtung
- 22: Scanrichtung
- 24: Scanbereich
- 26: ausgeblendeter Bereich
- 30: Rad
- Lⱼ, Lₖ, Lᵢ: Lichtstrahl
- Rⱼ, Rₖ, Rᵢ: Richtung eines Lichtstrahls
- N: Anzahl der Richtungen
- M: Anzahl der Scanvorgänge
- MTi: Messtoleranzbereich

## Patentansprüche

1. Verfahren zur automatischen Konturerfassung zur Feststellung einer in einem Erfassungsbereich eines Scanners relativ zu dem Scanner feststehenden Kontur während eines Konfigurationsvorganges vor der Überwachung eines Überwachungsbereichs mit folgenden Schritten:
- Durchführen von M Scanvorgängen, wobei M größer als 1 ist, zum jeweiligen Abscannen des Erfassungsbereiches (24) mit wenigstens einem Scanner (12), wobei ein Scanvorgang das Aussenden von N Lichtstrahlen Lᵢ, wobei i = 1, ..., N, unterschiedlicher Richtung Rᵢ in den Erfassungsbereich (24) und Detektion von gegebenenfalls im Erfassungsbereich reflektierten Lichtes umfasst und die Richtung Rᵢ des Lichtstrahles Lᵢ für jeden der M Scanvorgänge gleich ist, und wobei die Umgebung des Scanners (12) nicht bei allen M Scanvorgängen gleich ist,
- Messen der Länge des freien Lichtweges dᵢ für jede Richtung Rᵢ bei jedem der M Scanvorgänge,
- Feststellen des bei den M Scanvorgängen maximal gemessenen freien Lichtwegs dmaxᵢ und des minimal gemessenen freien Lichtwegs dminᵢ (i = 1, ..., N) für jede der N Richtungen,
- Klassifizieren einer Richtung Rᵢ in eine Konturklasse, wenn sich der maximal gemessene freie Lichtweg dmaxᵢ und der minimal gemessene freie Lichtweg dminᵢ höchstens um einen vorgegebenen Grenzwert T unterscheiden, wobei die Konturklasse dadurch definiert ist, dass eine Klassifizierung der Richtung Rᵢ in der Konturklasse eine Klassifizierung des zugehörigen Lichtstrahles Lᵢ als auf eine Kontur (14) treffend bedeutet, die bezüglich des Scanners (12) feststehend ist.

2. Verfahren zur automatischen Konturerfassung nach Anspruch 1, bei dem das Aussenden von N Lichtstrahlen Lᵢ unterschiedlicher Richtung Rᵢ in den Erfassungsbereich (24) und die Detektion des gegebenenfalls im Erfassungsbereich reflektierten Lichtes das Aussenden eines kontinuierlichen Scanlichtstrahles unter veränderlichem Winkel in den Erfassungsbereich (24) und die Detektion des gegebenenfalls im Erfassungsbereich reflektierten Lichtes zu einem Zeitpunkt umfasst, an dem der kontinuierliche Scanlichtstrahl in die jeweilige Richtung Rᵢ strahlt.

3. Verfahren zur automatischen Konturerfassung nach einem der Ansprüche 1 oder 2, bei dem die Länge des freien Lichtweges aus der Laufzeit des Lichtes in der Richtung Rᵢ des jeweiligen Lichtstrahles Lᵢ bestimmt wird.

4. Verfahren zur automatischen Konturerfassung nach einem der Ansprüche 1 bis 3, bei dem zur Feststellung des maximal gemessenen freien Lichtwegs dmaxᵢ und des minimal gemessenen freien Lichtwegs dminᵢ in Richtung Rᵢ (i = 1, ..., N) folgende Schritte durchgeführt werden:
(i) Initialisieren von dminᵢ für jeden der i = 1, ..., N Lichtstrahlen auf einen Wert gleich oder größer als dem größten mit dem wenigstens einen Scanner (12) messbaren freien Lichtweg,
(ii) Initialisieren von dmaxᵢ für jeden der i = 1, ..., N Lichtstrahlen auf einen Wert gleich oder kleiner als dem kleinsten mit dem wenigstens einen Scanner (12) messbaren freien Lichtweg, vorzugsweise auf einen negativen Wert,
(iii) Setzen von dminᵢ auf den gemessenen Wert der Länge des bei einem durchgeführten Scanvorgang gemessenen freien Lichtwegs dᵢ für die Richtung Rᵢ, wenn der gemessene freie Lichtweg kleiner als der aktuelle Wert von dminᵢ ist,
(iv) Setzen von dmaxᵢ auf den gemessenen Wert der Länge des bei einem durchgeführten Scanvorgang gemessenen freien Lichtwegs dᵢ für die Richtung Rᵢ, wenn der gemessene freie Lichtweg größer als der aktuelle Wert von dmaxᵢ ist,
(v) Wiederholen der Schritte (iii) und (iv) für jeden der M Scanvorgänge.

5. Verfahren zur automatischen Konturerfassung nach einem der Ansprüche 1 bis 3, bei dem zur Feststellung des maximal gemessenen freien Lichtwegs dmaxᵢ und des minimal gemessenen freien Lichtwegs dminᵢ in Richtung Rᵢ (i = 1, ..., N) ein Histogramm aus den Messwerten der M Scanvorgänge für die Länge dᵢ des freien Lichtwegs in der Richtung Rᵢ gebildet wird, aus dem der maximal gemessene freie Lichtweg dmaxᵢ und der minimal gemessene freie Lichtweg dminᵢ entnommen werden.

6. Verfahren zur automatischen Konturerfassung nach einem der Ansprüche 1 bis 5, bei dem eine in der Konturklasse klassifizierte Richtung Rᵢ als instabil klassifiziert wird, wenn
(i) eine räumlich benachbarte Richtung Rⱼ nicht als in der Konturklasse klassifiziert ist, und/oder
(ii) sich der Wert des maximal gemessenen freien Lichtwegs dmaxᵢ und der Wert des minimal gemessenen freien Lichtwegs dminᵢ in Richtung Rᵢ nach Durchführung der M Scanvorgänge um mehr als die maximal erwartete Messungenauigkeit der Entfernungsmessung des Scanners (12) unterscheiden, und/oder
(iii) sie durch einen Benutzer als instabil klassifiziert wird, und/oder
(iv) sie außerhalb eines vom Benutzer eingestellten lateralen Winkelbereichs liegt.

7. Verfahren zur automatischen Konturerfassung nach einem der Ansprüche 1 bis 6, bei dem für diejenigen der Richtungen Rᵢ (i = 1, ..., N), die in eine Konturklasse klassifiziert sind, ein jeweiliger Messtoleranzbereich MTᵢ für die Entfernung festgelegt wird, in welchem bei einer darauf folgenden Konturmessung eine Kontur erwartet wird, wobei der Messtoleranzbereich MTᵢ vorzugsweise von dem maximal gemessenen freien Lichtweg dmaxᵢ in der Richtung Rᵢ und dem minimal gemessenen freien Lichtweg dminᵢ in der Richtung Rᵢ abhängt.

8. Verfahren zur Überwachung eines Überwachungsbereiches mit wenigstens einem Scanner (12), bei dem während der Überwachung überprüft wird, ob sich in den gemäß Anspruch 7 festgelegten Messtoleranzbereichen MTᵢ zu den in der Konturklasse klassifizierten Richtungen Rᵢ eine Kontur befindet, und vorzugsweise ein Signal erzeugt wird, wenn dies nicht der Fall ist.

9. Verfahren zur Überwachung eines Überwachungsbereiches nach Anspruch 8, bei dem ein Überwachungsbereich eines insbesondere fahrerlosen Fahrzeuges (10) mit wenigstens einem Scanner (12) überwacht wird, der mit dem Fahrzeug (10) mitbewegt wird, wobei der Überwachungsbereich zumindest einen Teil der Umgebung des Fahrzeuges (10) umfasst und Teile (14) des Fahrzeuges in einem Einlernprozess mit einem Verfahren gemäß einem der Ansprüche 1 bis 7 als relativ zum Scanner feststehende Kontur erfasst wurden.

10. Vorrichtung zur automatischen Konturerfassung mit wenigstens einem Scanner (12) zum Abscannen eines Erfassungsbereiches (24) und einer Steuerungseinrichtung (18), die zur Durchführung eines Verfahrens nach einem der Ansprüche 1 bis 9 ausgestaltet ist.

11. Fahrzeug, insbesondere fahrerloses Fahrzeug (10), mit einer Vorrichtung zur automatischen Konturerfassung nach Anspruch 10.

12. Maschine mit einer Vorrichtung nach Anspruch 10 zur automatischen Konturerfassung in einem Gefahrenbereich.

## Claims

1. A method for the automatic contour detection for determining a contour in a fixed position relative to a scanner in a detection zone of the scanner during a configuration procedure prior to the monitoring of a monitored zone, comprising the following steps:
- carrying out M scanning procedures, where M is larger than 1, for the respective scanning of the detection zone (24) using at least one scanner (12), wherein a scanning procedure includes the transmission of N light beams Lᵢ, where i = 1, ..., N, of different directions Rᵢ into the detection zone (24) and detecting light which may be reflected in the detection zone and wherein the direction Rᵢ of the light beam Lᵢ is the same for each of the M scanning procedures, and wherein the surroundings of the scanner (12) is not the same for all M scanning procedures;
- measuring the length of the free light path dᵢ for each direction Rᵢ in each of the M scanning procedures;
- determining the maximum measured light path dmaxᵢ and the minimally measured free light path dminᵢ (i = 1, ..., N) for each of the N directions in the M scanning procedures;
- classifying a direction Rᵢ in a contour class when the maximum measured free light path dmaxᵢ and the minimally measured free light path dminᵢ differ by at most a predefined limit value T, with the contour class being defined in that a classification of the direction Rᵢ in the contour class means a classification of the associated light beam Lᵢ as incident onto a contour (14) which is in a fixed position with respect to the scanner (12).

2. A method for the automatic contour detection in accordance with claim 1, wherein the transmission of N light beams Lᵢ of different directions Rᵢ into the detection zone (24) and the detection of the light which may be reflected in the detection zone includes the transmission of a continuous scan light beam at a changing angle into the detection zone (24) and the detection of the light which may be reflected in the detection zone at a point in time at which the continuous scan light beam radiates into the respective direction Rᵢ.

3. A method for the automatic contour detection in accordance with one of the claims 1 or 2, wherein the length of the free light path is determined from the time of flight of light in the direction Rᵢ of the respective light beam Lᵢ.

4. A method for the automatic contour detection in accordance with any one of the claims 1 to 3, wherein the following steps are carried out for determining the maximum measured free light path dmaxᵢ and the minimally measured free light path dminᵢ in the direction Rᵢ (i = 1, ..., N):
(i) initialising dminᵢ for each of the i = 1, ..., N light beams to a value equal to or greater than the largest free light path measurable using the at least one scanner (12);
(ii) initialising dmaxᵢ for each of the i = 1, ..., N light beams to a value equal to or smaller than the smallest free light path measurable using the at least one scanner (12), preferably to a negative value;
(iii) setting dminᵢ to the measured value of the length of the free light path dᵢ measured on a carried out scanning procedure for the direction Rᵢ when the measured free light path is smaller than the current value of dminᵢ;
(iv) setting dmaxᵢ to the measured value of the length of the free light path dᵢ measured on a carried out scanning procedure for the direction Rᵢ when the measured free light path is larger than the current value of dmaxᵢ;
(v) repeating the steps (iii) and (iv) for each of the M scanning procedures.

5. A method for the automatic contour detection in accordance with any one of the claims 1 to 3, wherein, for determining the maximum measured free light path dmaxᵢ and the minimally measured free light path dminᵢ in the direction Rᵢ (i = 1, ..., N), a histogram is formed from the measured values of the M scanning procedures for the length dᵢ of the free light path in the direction Rᵢ from which the maximum measured free light path dmaxᵢ and the minimally measured free light path dminᵢ are taken.

6. A method for the automatic contour detection in accordance with any one of the claims 1 to 5, wherein a direction Rᵢ classified in the contour class is classified as unstable when
(i) a spatially adjacent direction Rⱼ is not classified as in the contour class; and/or
(ii) the value of the maximum measured free light path dmaxᵢ and the value of the minimally measured free light path dminᵢ in the direction Rᵢ differ after carrying out the M scanning procedures by more than the maximum expected measurement precision of the distance measurement of the scanner (12); and/or
(iii) it is classified as unstable by a user; and/or
(iv) it lies outside a lateral angular region set by the user.

7. A method for the automatic contour detection in accordance with any one of the claims 1 to 6, wherein a respective measurement tolerance range MTᵢ is fixed for those ones of the directions Rᵢ (i = 1, ..., N) which are classified in a contour class for the distance at which a contour is expected in a following contour measurement, with the measurement tolerance range MTᵢ preferably depending on the maximum measured free light path dmaxᵢ in the direction Rᵢ and on the minimally measured free light path dminᵢ in the direction Rᵢ.

8. A method for monitoring a monitored region using at least one scanner (12), wherein a check is made during the monitoring whether a contour is located in the measurement tolerance ranges MTᵢ fixed in accordance with claim 7 with respect to the directions Rᵢ classified in the contour class and a signal is preferably generated when this is not the case.

9. A method for monitoring a monitored zone in accordance with claim 8, wherein a monitored zone of a vehicle, in particular of a driverless vehicle (10), is monitored using at least one scanner (12) which is moved along with the vehicle (10), with the monitored zone including at least a part of the surroundings of the vehicle (10) and parts (14) of the vehicle being detected as a contour in a fixed position relative to the scanner in a teaching process using a method in accordance with any one of the claims 1 to 7.

10. An apparatus for the automatic contour detection using at least one scanner (12) for scanning a detection zone (24) and using a control device (18) which is equipped for carrying out a method in accordance with any one of the claims 1 to 9.

11. A vehicle, in particular a driverless vehicle (10), having an apparatus for the automatic contour detection in accordance with claim 10.

12. A machine having an apparatus in accordance with claim 10 for the automatic contour detection in a danger zone.

## Revendications

1. Procédé pour la saisie automatique de contour pour la constatation d'un contour stationnaire par rapport à un scanner dans une zone de détection du scanner pendant un processus de configuration avant la surveillance d'une zone de surveillance, comprenant les étapes suivantes :
- on exécute M opérations de scannage, où M est supérieur à 1, afin de scanner respectivement la zone de détection (24) avec au moins un scanner (12), dans lesquelles une opération de scannage inclut l'émission de N rayons lumineux L, tels que i = 1, ..., N, avec une direction différente Rᵢ vers la zone de détection (24) et la détection de la lumière éventuellement réfléchie dans la zone de surveillance, et la direction Rᵢ du rayon lumineux Lᵢ pour chacune des M opérations de scannage est la même, et dans lequel l'environnement du scanner (12) n'est pas le même pour toutes les M opérations de scannage,
- on mesure la longueur du trajet libre de la lumière di pour chaque direction Rᵢ à chacune des M opérations de scannage,
- on constate le trajet libre maximum dmaxᵢ pour la lumière mesuré lors des M opérations de scannage, et le trajet libre minimum mesuré pour la lumière dminᵢ (i = 1, ..., N) pour chacune des N directions,
- on classifie une direction Rᵢ dans une classe de contour si le trajet de lumière libre maximum mesuré dmaxᵢ et le trajet de lumière libre minimum mesuré dminᵢ diffèrent au maximum d'une valeur limite T prédéterminée, et la classe de contour est définie par le fait qu'une classification de la direction Rᵢ dans la classe de contour signifie une classification du trajet de lumière associé Lᵢ comme tombant sur un contour (14) qui est stationnaire par rapport au scanner (12).

2. Procédé pour la saisie automatique de contour selon la revendication 1, dans lequel l'émission de N rayons de lumière Lᵢ de directions différentes Rᵢ dans la zone de détection (24), et la détection de la lumière éventuellement réfléchie dans la zone de détection incluent l'émission d'un rayon de lumière de scannage continu sous un angle variable vers la zone de détection (24) et la détection de la lumière éventuellement réfléchie dans la zone de surveillance à un instant auquel le rayon de lumière de scannage continu rayonne dans la direction respective Rᵢ.

3. Procédé pour la saisie automatique de contour selon l'une des revendications 1 ou 2, dans lequel la longueur du trajet de lumière libre est déterminée à partir du temps de parcours de la lumière dans la direction Rᵢ du rayon de lumière respectif Lᵢ.

4. Procédé pour la saisie automatique de contour selon l'une des revendications 1 à 3, dans lequel pour constater le trajet de lumière libre maximum mesuré dmaxᵢ et le trajet de lumière libre minimum mesuré dminᵢ en direction Rᵢ (i = 1, ..., N) on exécute les opérations suivantes :
(i) initialisation de dminᵢ pour chacun des i = 1, ..., N rayons de lumière à une valeur égale ou supérieure au plus grand trajet de lumière libre capable d'être mesuré avec ledit au moins un scanner (12),
(ii) initialisation de dmaxᵢ pour chacun des i = 1, ..., N rayons de lumière à une valeur égale ou inférieure au plus petit trajet de lumière libre capable d'être mesuré avec ledit au moins un scanner (12), de préférence à une valeur négative,
(iii) fixation de dminᵢ à la valeur de la longueur mesurée du trajet de lumière libre dᵢ mesuré à une opération de scannage exécutée, pour la direction Rᵢ, quand le trajet de lumière libre mesuré est inférieur à la valeur actuelle de dminᵢ,
(iv) fixation de dmaxᵢ à la valeur mesurée de la longueur du trajet de lumière libre dᵢ mesuré à une opération de scannage exécutée, pour la direction Rᵢ, quand le trajet de lumière libre mesuré est supérieur à la valeur actuelle de dmaxᵢ,
(v) répétition des opérations (iii) et (iv) pour chacune des M opérations de scannage.

5. Procédé pour la saisie automatique de contour selon l'une des revendications 1 à 3, dans lequel pour constater le trajet de lumière libre maximum mesuré dmaxᵢ et le trajet de lumière libre minimum mesuré dmini en direction Rᵢ (i = 1, ..., N) on forme un histogramme à partir des valeurs de mesures des M opérations de scannage pour la longueur dᵢ du trajet de lumière libre dans la direction Rᵢ, à partir duquel le trajet de lumière libre maximum mesuré dmaxᵢ et le trajet de lumière libre minimum mesuré dminᵢ sont relevés.

6. Procédé pour la saisie automatique de contour selon l'une des revendications 1 à 5, dans lequel on classifie une direction Rᵢ classifiée dans la classe de contour comme étant instable si
(i) une direction Rⱼ voisine dans l'espace n'est pas classifiée comme étant dans la classe de contour et/ou
(ii) la valeur du trajet de lumière libre maximum mesuré dmaxᵢ et la valeur du trajet de lumière libre minimum mesuré dminᵢ en direction Rᵢ, après exécution des M opérations de scannage, diffèrent de plus de l'exactitude de mesure maximum attendue de la mesure d'éloignement du scanner (12), et/ou
(iii) elle est classifiée par un utilisateur comme étant instable, et/ou
(iv) elle tombe à l'extérieur d'une plage angulaire latérale réglée par l'utilisateur.

7. Procédé pour la saisie automatique de contour selon l'une des revendications 1 à 6, dans lequel pour celles des directions Rᵢ (i = 1, ..., N), qui sont classifiées dans une classe de contour, on fixe une plage de tolérances de mesure MTᵢ respective pour l'éloignement, dans laquelle on attend un contour lors d'une mesure de contour qui lui fait suite, et la plage de tolérances de mesure MTᵢ dépend de préférence du trajet de lumière libre maximum mesuré dmaxᵢ dans la direction Rᵢ, et du trajet de lumière libre minimum mesuré dmini dans la direction Rᵢ.

8. Procédé pour la surveillance d'une zone de surveillance avec au moins un scanner (12), dans lequel on vérifie pendant la surveillance si, dans les plages de tolérances de mesure MTᵢ fixées d'après la revendication 7 vis-à-vis des directions Rᵢ classifiées dans la classe de contour, on trouve un contour, et de préférence on engendre un signal si cela n'est pas le cas.

9. Procédé pour la surveillance d'une zone de surveillance selon la revendication 8, dans lequel on surveille une zone de surveillance d'un véhicule (10) en particulier sans conducteur, avec au moins un scanner (12) qui est déplacé conjointement avec le véhicule (10), dans lequel la zone de surveillance inclut au moins une partie de l'environnement du véhicule (10) et des parties (14) du véhicule ont été saisies dans un processus d'apprentissage avec un procédé selon l'une des revendications 1 à 7, comme des contours stationnaires par rapport au scanner.

10. Dispositif pour la saisie automatique de contour avec au moins un scanner (12) pour scanner une zone de détection (24) et un système de commande (18), qui est conçu pour mettre en oeuvre un procédé selon l'une des revendications 1 à 9.

11. Véhicule, en particulier véhicule sans conducteur (10), avec un dispositif pour la saisie automatique de contour selon la revendication 10.

12. Machine avec un dispositif selon la revendication 10 pour la saisie automatique de contour dans une zone à risque.
